**Europäisches Patentamt**

(19) **European Patent Office**

**Office européen des brevets**

(11) Numéro de publication: **0 062 586**
**B1**

## (12) FASCICULE DE BREVET EUROPEEN

(45) Date de publication du fascicule du brevet:
**21.08.85**

(51) Int. Cl.⁴: **C 03 B 37/14**

(21) Numéro de dépôt: **82400610.0**

(22) Date de dépôt: **02.04.82**

(54) **Procédé et dispositif de lavage utilisés dans la fabrication de matelas de fibres minérales.**

(30) Priorité: **02.04.81 FR 8106617**

(43) Date de publication de la demande:
**13.10.82 Bulletin 82/41**

(45) Mention de la délivrance du brevet:
**21.08.85 Bulletin 85/34**

(84) Etats contractants désignés:
**AT BE CH DE GB IT LI LU NL SE**

(56) Documents cités:
**FR - A - 2 247 346**
**FR - A - 2 294 138**
**FR - A - 2 368 445**

(73) Titulaire: **ISOVER SAINT-GOBAIN, Les Miroirs 18, avenue d'Alsace, F-92400 Courbevoie (FR)**

(72) Inventeur: **Baduel, Guy Marcel, Le Caillou blanc Charpenet, F-24120 Terrasson la Ville Dieu (FR)**

(74) Mandataire: **Le Vaguerese, Sylvain Jacques et al, SAINT-GOBAIN RECHERCHE 39, quai Lucien Lefranc, F-93304 Aubervilliers Cedex (FR)**

# Description

L'invention est relative au lavage mis en oeuvre dans la fabrication des matelas de fibres minérales, et plus précisément, au lavage effectué sur le trajet des effluents gazeux issus de cette fabrication.

La fabrication de matelas de fibres minérales ou de produits analogues comprend une succession d'opérations, et notamment:

— la formation des fibres,
— leur acheminement au moyen de courants gazeux vers un organe de réception,
— l'encollage des fibres au moyen d'un liant, par projection de celui-ci sous forme d'une composition finement divisée sur la trajet des fibres, entre leur production et l'organe de réception,
— la formation du matelas sur l'organe de réception habituellement constitué par un support perforé,
— la séparation des fibres et des courants gazeux porteurs par passage de ces gaz à travers l'organe de réception, de l'évacuation et/ou le recyclage des gaz récupérés en aval de l'organe de réception,
— le traitement du matelas de fibres enduites du liant, pour fixer ce liant, toutes les opérations précédentes étant mentionnées dans le brevet FR 2 247 346, ce traitement du matelas étant suivi éventuellement d'une étape de refroidissement, et l'évacuation des gaz issus du traitement de fixation du liant (effectué par exemple selon le mode décrit dans le brevet européen n° 0 000 111), et des gaz de refroidissement,
— la transformation du matelas aboutissant à la forme finale du produit, et la captation et l'évacuation de l'air chargé provenant de cette transformation.

Quels que soient le mode de production des fibres et le type de liant utilisé, les gaz effluents ne peuvent être ni recyclés, ni évacués sans un minimum de traitement en raison des éléments polluants qu'ils entrainent.

Parmi les éléments polluants ceux qui proviennent du liant sont particulièrement gênants. Ce sont notamment des fines gouttelettes qui n'ont pas été retenues dans le matelas de fibres, ou les produits gazeux s'échappant des compositions de liants. Ce sont aussi les produits de dégradation qui peuvent se dégager lorsque le liant est mis au contact des fibres à haute température.

A ces éléments polluants s'ajoutent bien évidemment des fibres non retenues par l'organe de réception, ou qui sont arrachées au matelas au cours des transformations aboutissant au produit final.

Ces éléments sont gênants pour plusieurs raisons. En particulier les gouttelettes et vapeurs de liant de liant encrassent rapidement les parois des installations et canalisations qui conduisent les gaz effluents. Elles ont tendance, en effet, à former des dépôts adhésifs qui retiennent les fibres ou fragments de fibres entrainés. Le maintien en état de l'installation nécessite alors l'élimination périodique de ces dépôts. En plus des arrêts qu'elles occasionnent, les opérations de remises en état sont très pénibles. Il en résulte un accroissement sensible des coûts de production.

Tel que décrit dans le brevet FR 2 247 346 pour ce qui concerne, parmi les gaz effluents, ceux mis en oeuvre dans les conditions de formation et d'acheminement jusqu'à leur réception, le premier traitement effectué sur le trajet des gaz effluents est ordinairement une pulvérisation d'eau qui a pour but de refroidir et d'éliminer dès l'origine le maximum d'éléments polluants. Par cette pulvérisation, on s'efforce en particulier d'éliminer le plus possible de liant, pour éviter l'encrassage de l'installation dont nous avons vu qu'il constitue un problème important dans ce type de fabrication.

La mise en oeuvre efficace de cette pulvérisation d'eau soulève cependant certaines difficultés.

Un premier type de difficultés est lié à la quantité extrêmement importante de gaz circulant dans ces installations, et par suite, aux dimensions des installations elles-mêmes dans lesquelles ces opérations doivent être conduites. Dans le brevet français FR 2 247 346 sont indiquées quelques valeurs de volumes de gaz, caractéristiques de différents modes de production des fibres. Ces valeurs sont de l'ordre de $0,1 \times 10^6$ à $1 \times 10^6$ m³/h de gaz effluents pour les opérations aboutissant à la formation du matelas. Comme nous le verrons il est difficile d'obtenir une dispersion fine et homogène sur des volumes aussi importants en utilisant les techniques traditionnelles dans ce domaine.

Un deuxième type de difficultés, pour ce qui concerne les gaz effluents provenant de la formation des fibres, vient de ce qu'il faut éviter la formation de dépôts sur la trajet des gaz et ceci dès que les gaz ont franchi l'organe de réception des fibres. En effet les dépôts qui se forment immédiatement sous cet organe de réception peuvent modifier la section de passage des gaz et par suite, le cheminement de ces gaz au travers du matelas en formation. Une telle modification nuit à l'homogénéité du matelas de fibres.

Pour prévenir la formation de ces dépôts il convient d'effectuer le lavage très près de l'organe de réception ce qui constitue une contrainte supplémentaire d'autant que le matelas de fibres formé ne doit pas être atteint par l'eau projetée au cours de cette opération de lavage.

Un troisième type de difficultés provient du fait que l'eau utilisée, qui s'est chargée d'éléments polluants, ne peut être rejetée. Il est donc habituel de la recycler après l'avoir débarrassée d'une partie des éléments polluants entrainés. Pour être d'un coût acceptable l'opération (ou les opérations) visant à débarrasser l'eau des polluants qu'elle contient doit être relativement simple. Il peut s'agir par exemple d'une filtration sommaire ou d'une opération analogue. A l'issue de ce traitement l'eau qui est recyclée présente ordinairement encore une teneur non négligeable de matières en suspension et de produits dissous stables ou non. Aussi son utilisation dans les dispositifs de pulvérisation habituels pose t'elle des problèmes notamment de bouchage ou d'érosion-corrosion.

Tradionnellement la pulvérisation est obtenue sous pression en faisant passer l'eau par des buses de petites dimensions. Pour l'utilisation considérée, ce mode présente plusieurs inconvénients. Ainsi, la quantité d'eau distribuée par chaque buse de pulvérisation, et l'étendue efficacement traitée par cette pulvérisation sont très limitées en raison de la dimension même de la buse. Il est bien entendu possible d'accroître le nombre de buses en conséquence. Néanmoins il est difficile d'atteindre une continuité parfaite et une bonne homogénéité de la nappe de gouttelettes d'eau dans tout l'espace nécessaire. En pratique, même avec un nombre élevé de buses de ce type, on ne parvient pas à intéresser la totalité de la veine gazeuse et par suite à éviter la formation de dépôts sur les parois de l'enceinte ou des canalisations.

Toujours en raison des dimensions des buses il se produit de fréquents bouchages, et ce d'autant plus que l'eau recyclée est plus chargée en éléments polluants. Même une bonne répartition des buses dans le domaine de pulvérisation ne peut donc garantir une pulvérisation homogène continue. Ces bouchages nécessitent en outre de fréquentes interventions pour remise en état.

Pour tenter de résorber les difficultés rencontrées, les buses traditionnelles ont été remplacées par des dispositifs dans lesquels la dispersion de l'eau n'est plus obtenue par passage sous pression dans des ajutages de faibles sections, mais par projection sur un élément courbe concave (une sorte de cuillère ou de spatule). Le jet dirigé sur cet élément forme une nappe liquide qui s'évase et éclate en une multitude de gouttelettes.

Ce mode de pulvérisation permet une augmentation sensible du débit de chaque jet. Néanmoins la formation de gouttelettes très fines n'est possible que pour des débits qui restent encore relativement faibles.

On constate par ailleurs une usure rapide de l'élément assurant la dispersion de l'eau. Il se dépolit en quelques heures sur le trajet de l'eau chargée en particules abrasives. Ensuite un phénomène d'érosion-corrosion sous atmosphère provoque en quelques jours la deformation de l'élément de dispersion qui devient moins efficace. Le remplacement de ces éléments, de façon typiques, doit être entrepris après deux semaines de fonctionnement continu.

Un but de l'invention est de parvenir à une pulvérisation d'eau dans des conditions telles qu'elle prévienne la formation de dépôts sur la parois des enceintes et canalisations empruntées par les gaz effluents de la fabrication de matelas de fibres minérales.

Un autre but de l'invention pour ce qui concerne la partie de l'installation située immédiatement sous l'organe de réception des fibres est d'obtenir l'effet de nettoiement des parois dès l'origine, à la limite de l'organe de réception, sans discontinuité, et sans que l'eau de pulvérisation n'atteigne cet organe.

Un autre but de l'invention est d'aboutir à une dispersion de l'eau de façon bien homogène dans les enceintes ou canalisations conduisant ces gaz effluents, même lorsque celles-ci sont de grandes dimensions.

Un autre but de l'invention est de parvenir à une bonne efficacité d'élimination des produits polluants portés par les gaz effluents.

Un autre but de l'invention est de mettre en oeuvre des moyens permettant de pulvériser de l'eau même chargée de particules abrasives, sans que leur fonctionnement soit sensiblement modifié après une utilisation prolongée.

Un autre but de l'invention est de mettre en oeuvre des moyens permettant de pulvériser de l'eau accidentellement chargée de corpuscules relativement volumineux sans risquer de bouchage.

Un autre but de l'invention est de pouvoir étendre l'application des mêmes moyens de lavage à tous les gaz effluents provenant du procédé de fabrication précédemment décrit.

Ces buts sont atteints grâce à l'invention dont un objet est un procédé de fabrication de matelas de fibres minérales tel qu'indiqué précédemment, et dans lequel on disperse de l'eau sur le trajet des gaz effluents par collision de deux jets dirigés l'un vers l'autre de facon qu'une nappe d'eau dispersée se développe transversalement au trajet des gaz.

La pulvérisation par collision de jets est connue essentiellement pour disperser des combustibles liquides dans des chambres de combustion de moteurs. Dans ces applications le débit de liquide est relativement petit et la dispersion est réalisée dans un gaz à vitesse élevée (de l'ordre de 30 m/s).

Il a été aussi envisagé de pulvériser de l'eau par collision de jets dans le col d'un dispositif de type venturi, cet ensemble étant destiné à éliminer les fines poussières de gaz de hauts fourneaux après que ceux-ci ont subi un premier lavage. Dans cette application, la dispersion est effectuée dans un gaz dont on s'efforce de maintenir la vitesse à une valeur élevée, et à un emplacement où la section de passage est étroite.

La dispersion d'eau par collision de jets selon l'invention se distingue de ces applications antérieures aussi bien par le domaine dans lequel cette technique est utilisée que par les buts poursuivis ou encore, comme cela est décrit plus amplement dans ce qui suit, par les conditions de mise en oeuvre.

Les d études qui ont abouti à l'invention ont montré que par la collision de deux jets il est possible de développer une nappe de gouttelettes très étendue en comparaison de celles produites par les moyens traditionnels. On obtient une dispersion sur de grandes surfaces, sans discontinuité dans la distribution spatiale des gouttelettes. Ceci représente un avantage certain par rapport aux modes antérieurs de pulvérisation.

En opérant de la façon proposée par l'invention, même lorsque le traitement est effectué dans des enceintes très vastes, il est possible de n'utiliser qu'un petit nombre de dispositifs de dispersion. Par un choix convenable des paramètres des jets en collision et de leur emplacement on couvre sans difficulté toute la section des enceintes pour les installations du type considéré.

Ordinairement la forme de la nappe de gouttelettes développée ne correspond pas exactement à celle de la section de l'enceinte, et une partie de l'eau se trouve projetée sur les parois. La paroi dans la zone d'impact des gouttelettes est en quelque sorte »décapée«. Pour obtenir cette action de nettoyage des parois il n'est cependant pas nécessaire que l'impact soit violent.

Par ailleurs, l'expérience montre que le lavage des gaz effluents au moyen de la dispersion d'eau très homogène produite par collision de jets conduit à des parois très propres, même en dehors des zones d'impact.

Dans une certaine mesure, il est préférable de limiter la violence de l'impact pour éviter l'érosion des parois. Ceci est obtenu en ajustant la forme et l'étendue de la nappe de gouttelettes, en modifiant les conditions de fonctionnement des jets de la façon qui est décrite ci-après.

Plusieurs conditions commandent la forme et l'étendue des nappes de gouttelettes dispersées.

Si les deux jets au point de rencontre sont identiques, c'est à dire s'ils présentent les mêmes caractéristiques de dimensions, de vitesse et de débit, la projection des gouttelettes se fait pratiquement dans un plan. Ce plan est orthogonal à celui des jets et constitue une plan de symétrie. La gravité et les gaz qui traversent la nappe de gouttelettes déforment ce plan. Mais pour des vitesses de gaz relativement faibles et des vitesse de jets relativement élevées, telles que celles mises en oeuvre selon l'invention, cette déformation est limitée. En première approximation on peut considérer que la nappe est plane.

En pratique il parait avantageux d'avoir une nappe initialement plane ce qui permet, les autres caractéristiques des jets étant constantes, de couvrir la section la plus grande. Il est néanmoins possible d'utiliser des jets d'intensités différentes (débit-vitesse). On forme alors des nappes dont l'apparance est celle d'un paraboloïde plus ou moins déformé. Une telle disposition peut paraitre avantageuse lorsque par exemple pour un débit donné de liquide la dispersion est faite dans une canalisation dont les dimensions sont relativement petites, et que l'on veut éviter que la nappe liquide frappe les parois. Dans ce cas on s'efforce de développer une nappe déformée, étirée dans le sens longitudinal de la canalisation.

Dans tous les cas les jets, même différents, ont des caractéristiques qui restent du même ordre de grandeur pour que la dispersion se produise de façon satisfaisante.

La forme générale de la nappe a été déterminée de façon expérimentale également en fonction de l'angle entre les deux jets. Cette étude faite pour deux jets identiques montre que la nappe se développe sous forme circulaire lorsque les jets concourants sont alignés, c'est à dire font entre eux un angle de 180°. Si l'angle diminue, la nappe de gouttelettes tend à prendre la forme d'un secteur circulaire dont l'angle décroit en même temps que décroit l'angle entre les jets. Dans ce dernier cas le centre du secteur correspond au point d'impact des jets.

Il est préférable de faire en sorte que le dispositif de pulvérisation (désigné également sous le nom d'injecteur) ne crée pas d'obstacle sur le chemin des gaz. Autrement dit ce dispositif est de préférence près d'une paroi de l'enceinte, ou de la canalisation, dans laquelle il est disposé. Dans ces conditions on a tendance à rechercher des nappes en forme de secteur dont l'ouverture est voisine de 180° pour bien couvrir l'espace jusqu'à la paroi à partir de laquelle s'effectue la pulvérisation. Il peut être même avantageux de former une nappe dont l'ouverture est supérieure à 180°, ce qui permet d'irriguer également la paroi sur laquelle l'injecteur est fixé. Bien entendu si le dispositif est situé près d'un coin, une ouverture de la nappe moindre peut être préférée. Dans ce cas l'angle des jets est ramené à une valeur plus petite.

Dans la suite de la description sont donnés des exemples d'angles de jets, et la forme des nappes correspondantes. En pratique l'angle entre les jets n'est pas inférieur à 30° et de préférence est compris entre 60 et 130°.

Bien entendu la nappe se développe aussi sur une certaine épaisseur à partir du point d'impact et de part et d'autre du plan initial. Cette épaisseur reste relativement faible par rapport aux autres dimensions. Elle ne dépasse ordinairement pas quelques dizaines de centimètres. Elle est pratiquement proportionnelle au débit et d'autant plus petite que l'angle d'incidence des jets est plus grand.

Si la forme générale de la nappe est principalement commandée par la fait que les jets sont identiques et par l'angle entre ceux-ci, l'étendue de la nappe est fonction du débit et de la vitesse des jets.

Il est préférable comme nous l'avons vu d'avoir des nappes de gouttelettes suffisamment vastes pour éviter des discontinuités dans la distribution. Il pourrait donc paraitre souhaitable de créer une nappe de dimensions telles que toute la section soit couverte. Cette solution peut effectivement être adoptée. Néanmoins l'utilisation d'une nappe unique n'est pas souhaitable dans tous les cas.

Une raison qui peut conduire à utiliser plusieurs nappes vient de ce que, comme nous l'avons indiqué précédemment, la violence de la projection de l'eau sur les parois doit de préférence être limitée. Si pour recouvrir la totalité de la surface on était conduit à développer une nappe unique qui virtuellement déborde très largement les limites de l'enceinte (ou de la canalisation), l'eau serait projetée sur les parois avec une énergie superflue qui pourrait même nuire au bon fonctionnement du dispositif.

Une autre raison est liée au fait que pour les très grandes surfaces il faudrait utiliser des jets à très grands débits, qui seraient difficiles à mettre en oeuvre dans les installations industrielles.

En pratique par la technique de collision de jets utilisée selon l'invention, on peut aisément développer des nappes de gouttelettes de 45 m² de surface utile ou même bien davantage. Pour les raisons indiquées précédemment il est préférable de développer des nappes dont les dimensions ne sont pas les plus grandes possibles, et de disposer plusieurs injecteeurs produisant une série de nappes se recouvrant partiellement.

La quantité d'eau que doit débiter chaque paire de jets dépend principalement de la section de la veine gazeuse et des surfaces de parois à irriguer. Pour la mise en oeuvre de la pulvérisation selon l'invention, des débits couramment utilisés sont compris entre 10 et 80 m³ par heure.

L'éclatement des jets en fines gouttelettes est fonction de la violence de la collision et donc de la vitesse des jets.

La vitesse est elle-même fonction de la pression exercée pour créer les jets. Dans les installations industrielles et pour des débits importants, il est difficile de dépasser des pressions de l'ordre de $10^6$ Pa. Pour la dispersion et le dimensionnement recherchés pour la mise en oeuvre selon l'invention des pressions de l'ordre de 3 à $6 \times 10^5$ Pa sont satisfaisantes.

Les dimensions des goutelettes sont fonction de la vitesse des jets et donc de la pression. Expérimentalement on constate que plus la pression est élevée et par suite plus l'énergie des jets est grande, plus on a tendance à former des gouttelettes fines. Cette variation est cependant relativement lente. Autrement dit, de grandes variations de pression n'entraînent qu'une faible modification de la dimension des gouttes. Dès que l'on opère à des pression de l'ordre ou supérieures à $2,5 - 3 \times 10^5$ Pa, apparaît un certain pourcentage de gouttelettes extrêmement fines, c'est-à-dire dont les dimensions sont inférieures à 0,01 mm. D'une certaine façon la présence de ces gouttelettes très fines peut être favorable à l'opération de lavage, notamment en assurant un contact très poussé de l'eau et des gaz effluents, mais par ailleurs l'élimination ultérieure de ces gouttelettes, avant le rejet des gaz, peut nécessiter des opérations supplémentaires de séparation.

Les quantités d'eau utilisées selon l'invention sont du même ordre de grandeur que celles utilisées dans les dispositifs antérieurs. Eventuellement, en raison de la distribution plus régulière de l'eau dans les gaz, ces quantités peuvent être réduites.

Pour la pulvérisation d'eau sur le trajet des gaz effluents des installations de fabrication de matelas de fibres, on compte ordinairement qu'un volume d'eau de l'ordre de 0,5 à 2 m³ pour $10^3$ m³ de gaz donne des résultats satisfaisants. Ces valeurs ne sont bien évidemment pas impératives. Elles sont fonction de nombreux facteurs, et notamment des gaz effluents, en particulier de leur teneur en liant et de la nature du liant, de leur température, mais aussi de la qualité de l'eau. Pour cette dernière il faut en effet tenir compte de ce qu'elle est normalement recyclée après une purification plus ou moins poussée. Moins l'eau recyclée est chargée plus le traitement est efficace, et moins la quantité d'eau nécessaire est élevée.

La quantité d'eau utilisée peut aussi être rapportée à la section de l'enceinte ou de la canalisation dans laquelle la dispersion est effectuée. Avantageusement cette quantité est comprise entre 2 et 20 m³/m²/h. Le débit par unité de surface dépend bien évidemment du débit des gaz effluents passant par cette surface.

Suivant un autre aspect lié directement aux grandeurs que nous venons de décrire, il est apparu préférable selon l'invention, d'effectuer le traitement en un point de trajet des gaz effluents où la vitesse moyenne de ces derniers reste inférieure à 10 m/s, et même est inférieure à 5m/s. Il semble, mais ceci n'est qu'une hypothèse, que la vitesse des gaz étant plus faible, et par conséquent le temps de contact avec les gouttelettes plus grand, de meilleurs échanges s'opèrent entre les gaz et l'eau dispersée.

Ces conditions préférées de vitesses sont ordinairement présentes, particulièrement au début du trajet des gaz effluents, que ce soir dans l'enceinte (ou les caissons) disposés immédiatement en aval de l'organe de réception des fibres, ou que ce soit dès l'émission des effluents gazeux provenant des autres opérations conduites sur le matelas de fibres. Ceci est d'autant plus avantageux qu'il est préférable d'effectuer la pulvérisation d'eau dès que possible afin d'éviter les dépôts qui pourraient se former en amont de cette pulvérisation. La pulvérisation par collision de jets est donc réalisée de préférence juste en aval de la surface de réception des fibres et/ou directement à la sortie des enceintes de traitement et de conditionnement du matelas de fibres.

S'il parait préférable de procéder au lavage dès que possible sur le trajet des gaz effluents, il peut aussi être avantageux de renouveler ce lavage en divers points de ce trajet. En effet, même si par suite des qualités du lavage par collision de jets l'essentiel des pollants présents dans les gaz sont captés par les gouttelettes de la première nappe, une certaine quantité d'eau est entraînée par les gaz. Cette eau, d'autant plus abondante que la dispersion est plus fine, est susceptible de se déposer sur les parois le long du trajet. Si le gaz n'est pas saturé en humidité, il peut alors se former des dépôts, certes moins importants que dans la première partie du trajet, mais qui peuvent néanmoins être gênants. Pour cette raison on peut associer au lavage principal des lavages secondaires effectués avantageusement comme le premier par collision de jets.

L'eau projetée sur les parois ruisselle le long de celles-ci et est récupérée en bas de l'enceinte dans laquelle la pulvérisation est effectuée.

La partie de l'eau pulvérisée entraînée dans les gaz effluents est séparée de ceux-ci avant leur rejet dans l'atmosphère. Ordinairement une première séparation s'effectue dans l'enceinte de pulvérisation.

Les gouttes les plus grosses, ou celles qui se reforment à partir de plusieurs gouttelettes, se séparent des gaz sans opération particulière et sont récupérées dans la partie inférieure de l'appareillage avec l'eau ruissellant sur les parois.

Pour les gouttelettes très fines qui sont entraînées par les gaz on peut utiliser une méthode traditionnelle de séparation liquide/gaz.

L'eau récupérée est avantageusement recyclée. Elle est soumise au préalabke aux purifications habituelles dans ce domaine. Le minimum de purification avant recyclage consiste à effectuer une décantation pour éliminer une partie au moins des solides en suspension.

D'autres méthodes physiques ou chimiques peuvent compléter le traitement de purification. On peut notamment procéder à un dégazage de l'eau.

Quel que soit le ou les traitements de purification effectués on s'efforce de préférence de faire en sorte que l'eau recyclée ne contienne pas plus de 4% de matières sèches.

L'invention a également pour objet les dispositifs ou appareillages pour la mise en oeuvre du procédé décrit précédemment.

Ces dispositifs pour la fabrication d'un matelas de fibres minérales comprennent de façon générale les éléments suivants:

— un organe pour la formation des fibres,
— des moyens engendrant un ou plusieurs courants gazeux véhiculant les fibres,
— des moyens pour la projection d'une composition liquide de liant, finement dispersée dans le courant gazeux portant les fibres,
— un organe de réception sur lequel les fibres sont rassemblées pour former le matelas, et sont séparées du courant gazeux,
— éventuellement des moyens pour le traitement, notamment thermique, du matelas de fibres enduit de la composition de liant, et des moyens pour le refroidissement du matelas et les transformations aboutissant au produit final,
— des enceintes (ou canalisations) conduisant les gaz en aval de l'organe de réception et/ou les gaz issus du traitement du matelas de fibres, de son refroidissement ou des gaz émis au cours des transformations aboutissant au produit final,
— des moyens pour pulvériser de l'eau dans ces enceintes (ou canalisations) sur le trajet des gaz effluents.

Dans les dispositifs (ou installations) selon l'invention les moyens pour pulvériser l'eau sont constitués par au moins un injecteur formant deux jets concourants.

Cet injecteur est disposé dans l'enceinte (ou la canalisation) conduisant les gaz effluents de façon que la nappe d'eau produite se développe transversalement au trajet des gaz et de préférence dans une direction sensiblement orthogonale à ce trajet.

L'injecteur comporte deux tuyères dont les axes sont situés dans un même plan. A l'extrémité »libre« de ces tuyères sont fixées des buses servant à calibrer les jets émis.

De préférence les tuyères et les buses sont de forme cylindrique.

Pour produire des jets identiques, ce qui comme nous l'avons vu est le cas préféré, les tuyères et les buses sont de formes et de dimensions identiques, et la distance séparant l'orifice de la buse du point concours est la même pour les deux jets.

Les tuyères de l'injecteur, du fait de la puissance des jets mis en oeuvre, sont soumises à des efforts importants. Pour maintenir de façon rigoureuse les conditions géométriques définies initialement les tuyères sont avantageusement montées de façon fixe sur une platine bien rigide.

Cette platine sert aussi de protection contre l'érosion qui peut se développer à proximité immédiate de l'injecteur lorsque ce dernier par sa conformation dirige une quantité importante l'eau directement sur la paroi sur laquelle il est fixé.

L'injecteur est avantageusement disposé à proximité d'une paroi de l'enceinte ou de la canalisation. On évite ainsi de perturber le flux gazeux. De façon préférée l'injecteur est fixé sur la paroi de façon que seules les tuyères fassent saillie sur le trajet des gaz. Eventuellement même, les tuyères sont placées dans un logement, en retrait de la paroi, les jets seuls passant par des orifices ménagés à cet effet.

Le cas échéant un ou plusieurs déflecteurs peuvent être disposés en amont et à proximité de l'injecteur pour rectifier la projection d'eau lorsque momentanément le fonctionnement d'au moins l'un des jets est perturbé.

Compte tenu des conditions de débit qui ont été indiquées précédemment, les buses des injecteurs selon l'invention présentent habituellement une ouverture supérieure à 8 mm et le plus souvent comprise entre 8 mm et 17 mm.

Comme nous l'avons vu chaque injecteur peut produire une nappe de grande surface susceptible de recouvrir la totalité de la section de l'enceinte ou de la canalisation. Cependant il est préférable en général d'utiliser plusieurs injecteurs formant chacun une nappe couvrant une partie de cette section, les nappes adjacentes se recouvrant partiellement.

Dans les conditions de dimensions courantes des installations il est avantageux de disposer un injecteur environ pour chaque tranche de 2,5 m$^2$ de section.

Pour prolonger et/ou parfaire le traitement selon l'invention il est possible de procéder à plusieurs pulvérisations échelonnées sur le trajet des gaz. A cet effet, des injecteurs sont disposés à différents niveaux de l'enceinte (ou de la canalisation).

L'installation comprend aussi des dispositifs pour la séparation de l'eau entraînée par les gaz. Ces dispositifs sont avantageusement du type cyclône. Cette séparation peut être facilitée en favorisant au préalable le grossissement par fusion des gouttes entre elles.

Pour l'élimination des gouttelettes les plus fines on peut se servir d'accélérateurs de coalescence traditionnels.

Plusieurs systèmes de séparation peuvent être utilisés en combinaison, une combinaison particulière étant constituée par un cyclône suivi par un dispositif d'ultrafiltration.

L'eau séparée des gaz est ordinairement conduite dans un bac de décantation et/ou sur des filtres pour en éliminer une partie au moins des solides entraînés. Eventuellement une colonne de dégazage est également comprise dans l'installation.

D'autres dispositifs pour le traitement de l'eau peuvent compléter l'ensemble.

Dans la suite invention est décrite de façon plus détaillée en faisant référence aux planches de dessins dans lesquelles:

la figure 1 est un schéma de la partie d'une installation, pour le traitement des gaz provenant de la formation des fibres,

la figure 2 est un schéma en perspective de la zone de lavage en aval de l'organe de réception des fibres,

la figure 3 est un schéma en perspective d'un mode de mise en oeuvre du lavage selon l'invention, appliqué à un dispositif de traitement du matelas de fibres par exemple une étuve,

la figure 4 est un schéma analogue à celui de la figure 3 montrant un autre agencement des moyens de lavage,

la figure 5 est une coupe partielle de la figure 4 détaillant les communications entre l'enceinte de traitement de matelas et des moyens de lavage des gaz,

la figure 6 représente un mode de réalisation particulier d'un injecteur selon l'invention.

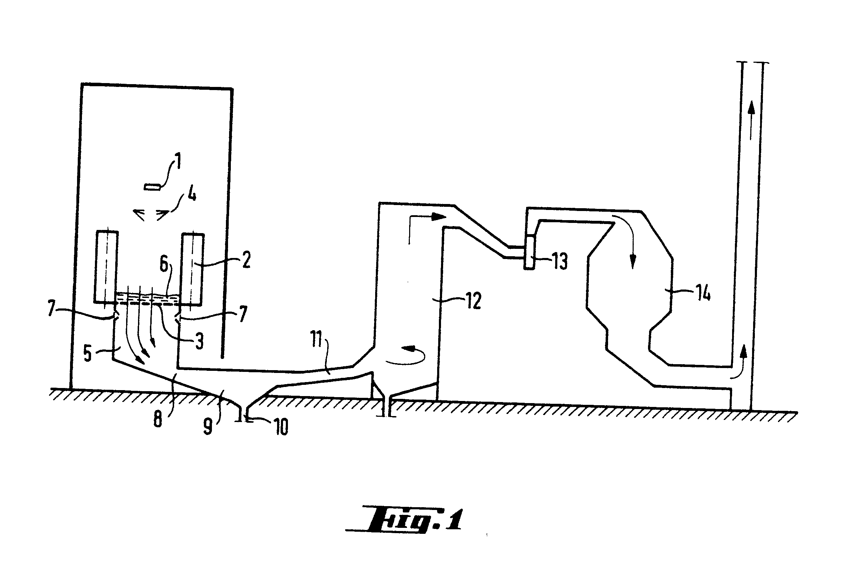

La figure 1 représente la partie dans laquelle sont conduites les opérations aboutissant à la formation des fibres, puis à celle du matelas. Sous cette installation se situe une série d'enceintes et de canalisations dans lesquelles circule le gaz aspiré à travers la surface de réception.

Le dispositif pour la formation des fibres est par exemples du type centrifuge. Il est représenté en 1. Il délivre une couronne de fibres reprises par des courants gazeux qui complètent l'étirage. L'ensemble de ces courants et des courants induits dans l'atmosphère ambiante est canalisé vers une hotte à parois mobiles 2. A la partie inférieure de cette hotte, et sur toute sa largeur, se situe une surface de réception des fibres 3 constituée par exemple par un tapis convoyeur perforé.

Entre l'organe de formation des fibres et la surface de réception, une composition de liant est pulvérisée sur le trajet des fibres. Des moyens de pulvérisation sont représentés en 4.

Sous la surface de réception se situe une premièrer enceinte constituée par un caisson 5 en légère dépression par rapport à l'atmosphère de la hotte. Les gaz passent de la hotte dans le caisson 5 à travers le matelas de fibres 6 et la surface de réception.

Des injecteurs à collision de jets 7 sont disposés sur les parois du caisson immédiatement sous l'organe de réception.

Les caractéristiques des injecteurs 7 sont choisies de façon que la nappe de gouttelettes s'étende sur toute la largeur du caisson et sature totalement le volume gazeux.

La caisson 5 communique par un passage 8 avec une chambre 9. La présence du passage 8, de section réduite, entraine une accélération des gaz et favorise une redispersion de l'eau ruisselant sur les parois du caisson 5, complétant ainsi l'effet de lavage.

Les gaz entrant dans la chambre 9 ralentissent. Les grosses gouttelettes en suspension se déposent et l'eau est évacuée par un conduit 10.

Les gaz lavés sont dirigés par une canalisation 11 vers un dispositif de séparation du type cyclône 12. Dans ce cyclône les fines gouttelettes entraînées se déposent et sont récupérées à la partie inférieure, tandis que les gaz épurés qui sortent à la partie supérieure sont aspirés par un ventilateur 13.

C'est ce ventilateur qui de proche en proche assure le maintien d'une dépression dans le caisson 5 et le cheminement des gaz dans toute la partie du dispositif située en aval de l'organe de réception des fibres.

Eventuellement, lorsque de très fines gouttelettes sont présentes dans les gaz, il peut être avantageux de compléter la séparation par passage des gaz dans un dispositif d'ultrafiltration représenté en 14.

Dans le schéma décrit précédemment, les gaz utilisés sont rejetés dans l'atmosphère. Il est également possible comme décrit dans les demandes de brevet français publiées n° 2 247 346, 2 318 121, 2 368 445, de recycler une partie du gaz utilisé. Dans ce cas, le gaz recyclé est pris par exemple à la sortie du ventilateur 13 et retourné dans l'enceinte ou s'effectue la formation des fibres.

L'eau récupérée en différents points du système est conduite dans des décanteurs. L'ensemble du système de canalisations et de traitement de l'eau n'est pas représenté sur cette figure.

Une installation complète comporte habituellement plusieurs dispositifs de formation de fibres alignés le long d'un avant corps amenant le matériau à fibrer. Le tapis convoyeur 3 formant l'organe de réception est disposé longitudinalement sous la série des dispositifs. Pour assurer la circulation des gaz, il est ordinairement commode de disposer plusieurs ensembles tels que décrits précédemment comprenant : caisson 5, chambre 9, cyclône 12, ventilateur 13, etc. ...., ceci essentiellement pour tenir compte de la capacité des éléments disponibles dans le commerce.

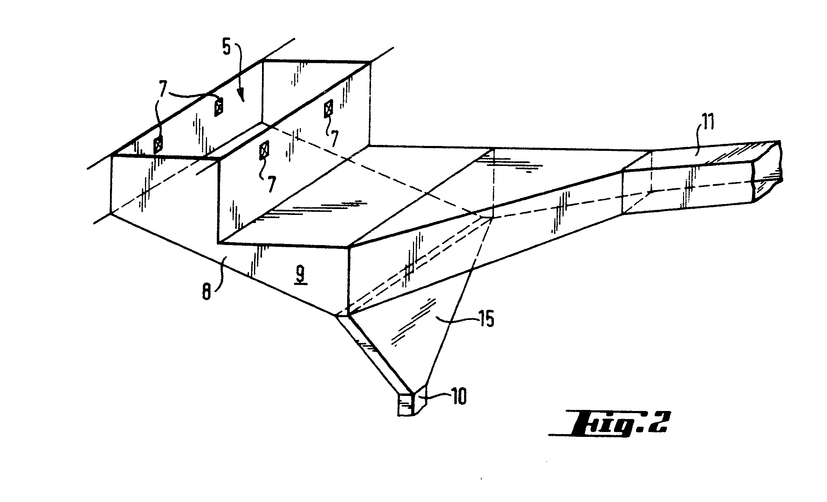

La figure 2 montre de façon plus détaillée la forme de l'installation représentée à la figure 1, au niveau du lavage.

La représentation est limitée aux éléments correspondant à un seul caisson 5. Ce caisson fait parte d'une série de caissons analogues s'étendant le long de la ligne de production.

Les emplacements des injecteurs de lavage sont indiqués sur les parois longitudinales du caisson.

Les quatre injecteurs 7 sont disposés deux à deux en position symétrique, et dans la partie supérieure du caisson, c'est-à-dire à proximité du tapis convoyeur non représenté.

Le fond du caisson est incliné pour faciliter l'écoulement de l'eau.

Le caisson 5 et la chambre adjacente 9 sont en communication sur toute leur longueur. La zone de communication est formée par le passage 8.

Le fond de la chambre 9 est également en pente. La partie basse forme un collecteur 15 qui rassemble l'eau avant que celle-ci ne soit évacuée par la canalisation 10.

Les gaz traversant la chambre 9 sont conduits dans la canalisation 11 et de là vers le dispositif de séparation non représenté.

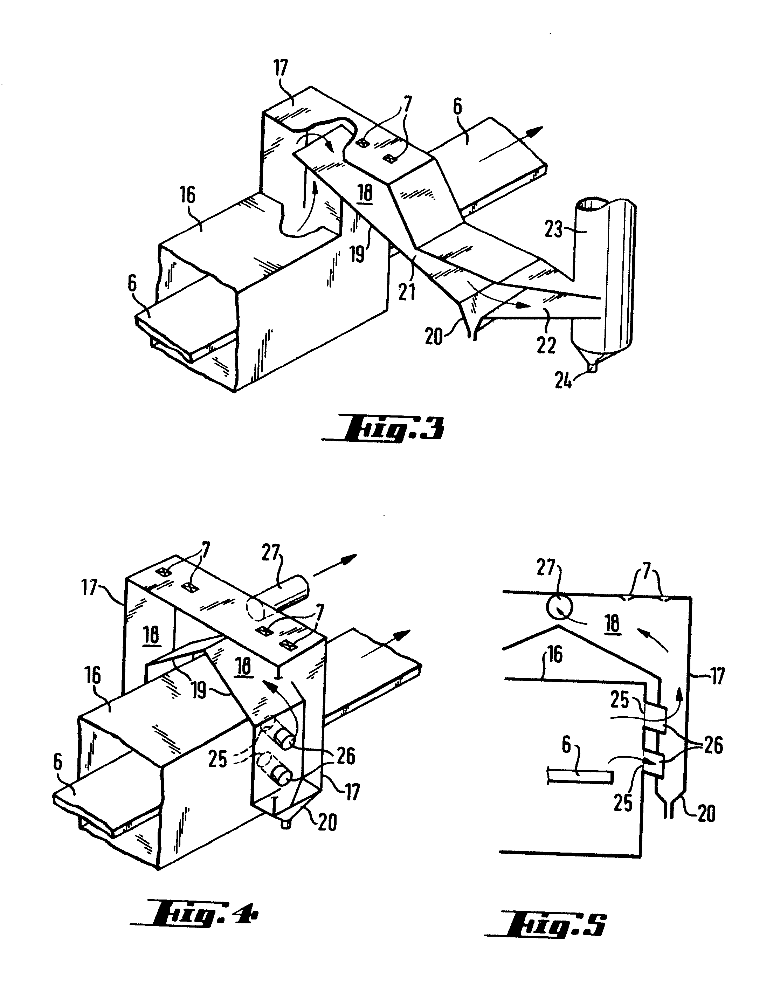

Le schéma de la figure 3 montre la disposition des enceintes d'évacuation et de lavage des gaz provenant d'un dispositif de traitement du matelas de fibres.

Ce dispositif est par exemple une étuve pour le durcissement des résines constituant le liant. Il peut s'agir également d'un ensemble de refroidissement par circulation d'air à température ambiante. Il peut s'agir encore d'un dispositif d'aspiration des poussièr formées par exemple à l'occasion de la découpe de matelas de fibres. Dans tous ces traitements, ou analogues, un courant gazeux chargé d'éléments polluants est formé.

Le traitement est effectué dans une enceinte 16 fermée, dont une partie seulement est représentée. Dans cette enceinte circule le matelas de fibres 6.

Pour des raisons de simplification les moyens de traitement ne sont pas représentés. Dans une étuve il s'agit par exemple de dispositifs permettant une circulation forcée de gaz chauds au travers du matelas. De tels dispositifs sont décrits notamment dans la demande de brevet français publiée sous le n° 2 394 041.

Les gaz pollués qui se forment au cours du traitement passent de l'enceinte 16 à une boite de changement de direction 17 disposée à la partie supérieure de l'enceinte 16, puis dans le caisson laveur 18. Pour permettre une meilleure représentation la paroi frontale des moyens conduisant les gaz est enlevée.

Les positions de deux injecteurs 7 à jets concourants sont indiquées sur la cloison supérieure du caisson laveur 18. Ces injecteurs sont disposés de façon que les nappes de gouttelettes se forment transversalement à la trajectoire des gaz. Eventuellement des déflecteurs tels que celui représenté à la figure 6, permettent d'éviter toute projection d'eau de lavage en direction de la boite 17.

Il va de soi que le nombre, la position et les caractéristiques des injecteurs utilisés dans un tel dispositif sont choisis par l'utilisateur en fonction des conditions spécifiques du lavage à effectuer.

Le fond du caisson laveur est constitué par une paroi inclinée 19 conduisant l'eau déposée vers le collecteur 20.

A la sortie du caisson laveur une section étroite 21 comprime et accélère les gaz qui se détendent ensuite dans le conduit de liaison 22. Ce conduit 22 aboutit au séparateur 23 de type cyclône.

L'eau séparée dans le cyclône 23 est évacuée par le collecteur 24.

L'installation comprend en outre habituellement un ventilateur non représenté et le cas échéant des moyens de filtration complémentaires.

Sur la figure 4 certaines faces du dispositif sont enlevées pour mieux montrer la disposition relative des différents éléments.

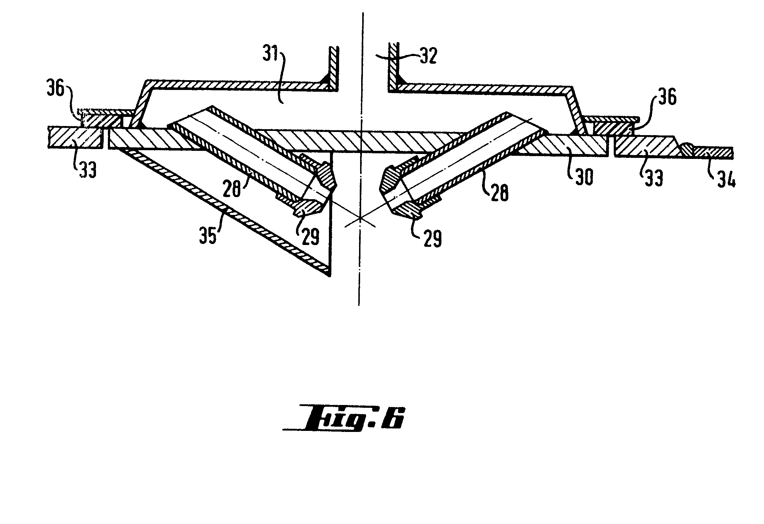

Le dispositif de la figure 4 et de la figure 5 est analogue au précédent, mais cette fois les gaz sortent de l'enceinte de traitement par des bouches de sortie 25 situées sur les faces latérales de l'enceinte 16.

Des manchons 26 s'avancent à l'intérieur des boites de changement de direction 17, disposées de chaque côté de l'enceinte 16. Ces boites 17 communiquent chacune avec un caisson laveur 18. Les deux caissons 18 sont réunis au dessus de l'enceinte 16. De ces caissons les gaz lavés s'échappent par la canalisation commune 27.

Sur chaque caisson laveur figurent les emplacements 7 de deux injecteurs à collision de jets. Dans ce dispositif comme dans le précédent les injecteurs sont disposés de façon que la nappe de gouttelettes se développe transversalement au courant gazeux.

L'eau dispersée s'écoule sur la paroi inclinée 19 formant le fond du caisson laveur, ruisselle sur les parois de la boite 17 et est évacuée par le collecteur 20. Les manchons 26 écartent l'eau de ruissellement de l'entrée des courants gazeux dans la boite 17.

D'autres dispositions pour la sortie des gaz de l'enceinte de traitement peuvent être envisagées. En particulier il est possible pour certaines réalisations d'évacuer les gaz à la base de l'enceinte. Dans ce cas l'ensemble de lavage peut être agencé de la façon décrite à propos des figures 1 et 2.

La figure 5 montre en particulier la position inclinée vers le bas des manchons 26 destinée à éviter toute introduction d'eau dans l'enceinte 16.

La figure 6 représente en coupe un injecteur selon l'invention.

Get injecteur comprend deux tuyères cylindriques 28 portant à leur extrêmité des buses 29 de calibrage. L'extrémité des tuyères 28 est filetée et les buses sont vissées.

Les tuyères 28 sont soudées sur une platine 30 qui forme une paroi de la chambre d'alimentation 31. L'eau de lavage est amenée à cette chambre d'alimentation par la canalisation 32. L'ensemble de la chambre 31, de la canalisation 32, des tuyères 28 et des buses 29, est disposé de façon rigoureusement symétrique de sorte que les jets formés soient identiques.

La platine 30 portant les tuyères 28 est fixée sur une deuxième platine 33 de protection fixée sur la paroi 34 par exemple par soudre. Elle est formée par une plaque épaisse qui reçoit directement l'impact de la partie de la nappe d'eau dirigée vers la paroi de l'enceinte, et protège cette dernière de l'abrasion.

Un joint 36 assure l'étanchéité entre les platines 30 et 33. Les moyens de fixation de ces platines entre elles ne sont pas représentés. Il peut s'agir notamment de vis.

La platine 30 porte un déflecteur conique 35 qui »enveloppe« une des tuyères de l'injecteur, pour empêcher la propagation du jet opposé, lorsque accidentellement le jet »enveloppé« est momentanément perturbé.

Cette disposition comme nous l'avons vu précédemment est particulièrement utile lorsque l'injecteur est situé à proximité de l'organe de réception des fibres et qu'il convient de protéger le matelas en formation contre une éventuelle projection d'eau.

Lorsque l'impact des jets est momentanément interrompu, le jet non enveloppé vient s'écraser contre le déflecteur 35. Bien entendu l'injecteur est disposé de façon que le déflecteur soit situé du côté de l'installation qu'il convient de protéger.

## Exemple 1

La configuration des nappes d'eau pulvérisée à été étudiée dans des essais préliminaires.

Il a été établi ainsi une série de mesures de l'angle d'ouverture de la nappe présentant la forme d'un secteur circulaire, en fonction de l'angle entre les deux jets identiques.

Ces valeurs mesurées sont les suivantes:

angle entre les jets
30" 60° 90° 100° 108° 120"

angle d'ouverture de la nappe
40" 80" 120" 150° 180° 210"

Les débits obtenus pour des buses de 16 mm et 8 · 10⁵ Pa atteignent 50 m³/h.

Pour les buses de 16 mm et une pression de 6 · 10⁵ Pa environ, sous un angle de 120° la nappe de gouttelettes formée est supérieure à 90 m².

## Exemple 2

Le lavage selon l'invention est pratiqué dans un caisson et dans la chambre adjacente, en aval du convoyeur de réception des fibres d'une installation de formation de matelas de fibres.

Antérieurement 13 éléments de pulvérisation à cuillère ou spatule étaient disposés dans le caisson et 16 dans la chambre adjacente.

Ces éléments sont remplacées par 2 injecteurs à collision de jets sur les parois opposées du caisson immédiatement sous le convoyeur (75 cm sous celui-ci) et deux dans la chambre adjacente qui par l'intermédiaire de gaines conduit les gaz vers un cyclône.

La section du caisson sous le convoyeur est d'environ 7,5 m².

La quantité de gaz passant dans ce caisson est d'environ 54 · 10³ m³/h.

Les injecteurs disposés dans le caisson ont des buses de 16 mm de diamètre, ceux des injecteurs disposés dans la chambre est de 11 mm.

La pression d'eau est de 5 · 10⁵ Pa.

Les jets sont dirigés l'un vers l'autre suivant un angle de 120°.

L'eau utilisée est de l'eau recyclée qui contient de l'ordre de 2,5% en poids d'extrait sec.

Dans le caisson le débit mesuré est d'environ 36 m³/h pour chaque injecteur. Il est de 18 m³/h pour chaque injecteur dans la chambre soit un total d'environ 108 m³/h, c'est-à-dire une quantité comparable à celle utilisée antérieurement avec les pulvérisateurs traditionnels.

Aucune difficulté n'est apparue au cours d'une année de fonctionnement continu. Aucune intervention n'a été nécessaire. Les injeteurs ne se sont jamais bouchés. L'usure des buses est négligeable. Pour le diamètre, elle est inférieure à un dixième de millimètre.

Les parois du caisson de la chambre, et des gaines qui leur font suite sont parfaitement propres.

## Exemple 3

A la suite des résultats obtenus et qui ont été rapportés à l'exemple 2, deux lignes entières de production de matelas de fibres ont été équipées d'un système de lavage par collision de jets.

Sur une ligne comprenant 8 organes de fibrage de type centrifuge produisant au total environ 140 tonnes de fibres par jour, la réception des gaz effluents sous le tapis convoyeur est assurée par quatre caissons.

Le volume total de gaz passant dans ces caissons est de l'ordre de 288 · 10³ m³/h.

Dix huit injecteurs à collision de jets sont disposés dans les caissons et dans les chambres adjacentes.

Les 18 injecteurs sont identiques. L'angle des jets est de 120°. Le diamètre des buses est de 13 mm et la pression d'eau de 5 · 10⁵ Pa. Chaque injecteur débite environ 26 m³/h soit un total de 468 m³/h.

Ces 18 injecteurs sont introduits dans cette installation en remplacement de 139 dispositifs de pulvérisation à cuillère.

Après plus de 6 mois de fonctionnement en continu, une visite de l'installation a montré la parfaite propreté de tout le circuit emprunté par les gaz notamment des caissons des gaines, des séparateurs cyclônes et des ventilateurs. Avec les moyens de lavage antérieurs des arrêts systématiques étaient nécessaires environ toutes les six semaines.

## Revendications

1. Procédé de fabrication de matelas de fibres minérales dans lequel:

— des fibres sont produites puis véhiculées au moyen de courants gazeux jusqu'à un organe de réception(3) où elles sont rassemblées et séparées du gaz vecteur,

— une composition liquide de liant finement dispersée est projetée dans le courant gazeux portant les fibres, en amont de l'organe de réception (3),

— le matelas de fibres (6) est éventuellement traité, notamment thermiquement, pour fixer le liant, et subit des transformations conduisant à la forme finale,

— de l'eau est pulvérisée sur la trajet des gaz ayant véhiculé les fibres en aval de l'organe de réception et/ou celui de gaz émanant des opérations de traitement pour la fixation du liant et/ou de transformation du matelas de fibres (6), caractérisé en ce que l'eau est dispersée par collision de jets dirigés l'un vers l'autre, da façon qu'une nappe d'eau dispersée se développe transversalement au trajet des gaz.

2. Procédé selon la revendication 1 caractérisé en que la collision est réalisée entre les jets d'une ou plusieurs paires de jets identiques, pour développer une (ou plusieurs) nappe(s) de gouttelettes sensiblement plane(s).

3. Procédé selon l'une des revendications précédentes, dans lequel les caractéristiques de la paire de jets (ou des paires de jets) sont choisies de façon à ce que nappe (ou les nappes) de gouttelettes d'eau dispersée couvre la totalité de la section de passage des gaz.

4. Procédé selon l'une quelconque des revendications précédentes, caractérisé en ce que la dispersion d'eau est faite sur des gaz s'écoulant à une vitesse moyenne inférieure à 10 m/s.

5. Procédé selon l'une quelconque des revendications précédentes, caractérisé en ce que la quantité d'eau dispersée est comprise entre 0,5 et 2 m³ d'eau pour un volume de gaz de 10³ · m³.

6. Procédé selon l'une quelconque des revendications précédentes, caractérisé en ce que le débit d'eau pour une paire de jets concourants est compris entre 10 et 80 m³/h.

7. Procédé selon l'une quelconque des revendications précédentes, caractérisé en ce que l'angle des jets concourants est supérieur à 30.

8. Procédé selon la revendication 7, caractérisé en que l'angle des jets est compris entre 60 et 130°.

9. Procédé selon l'une quelconque des revendications précédentes, caractérisé en ce que l'eau dispersée est amenée à une pression comprise entre 3 et 6 · 10⁵ Pa.

10. Procédé selon l'une quelconque des revendications précédentes, caractérisé en ce que le débit d'eau dispersée dans l'enceinte (5, 18) (ou la canalisation) par unité de surface de section et par heure est compris entre 2 et 20 m³/h · m².

11. Procédé selon l'une quelconque des revendications précédentes, caractérisé en ce que la dispersion d'eau est effectuée dès l'entrée des gaz effluents dans le circuit d'évacuation.

12. Procédé selon l'une quelconque des revendications précédentes, caractérisé en ce que l'eau dispersée est ensuite séparée des gaz et est soumise à une ou plusieurs opérations permettant d'éliminer une partie au moins des produits dont elle s'est chargée au contact des gaz et des parois de l'enceinte (ou de la canalisation), et qu'elle est réutilisée pour une nouvelle opération de lavage.

13. Procédé selon la revendication 12, caractérisé en que l'eau séparée des gaz est filtrée pour éliminer une partie au moins des produits solides entraînés, l'eau réulisée ne contenant pas plus de 4% de matières sèches.

14. Dispositif pour la fabrication d'un matelas de fibres minérales comprenant:

— un organe (1) pour la formation des fibres,

— des moyens engendrant un ou plusieurs courants gazeux véhiculant les fibres,

— des moyens (4) pour la projection d'une composition liquide de liant finement dispersée dans le courant gazeux portant les fibres,

— un organe de réception (3) sur lequel les fibres sont rassemblées pour former le matelas (6), et sont séparées du courant gazeux,

— eventuellement des moyens pour le traitement, notamment thermique, du matelas de fibres et la transformation du matelas pour lui donner sa forme finale,

— des enceintes (ou canalisations) (5, 9, 11, 17, 18, 22) conduisant les gaz ayant véhiculés les fibres en aval de l'organe de réception, et/ ou des gaz issus du traitement ou des transformations du matelas de fibres,

des moyens (7) pour pulvériser de l'eau dans ces enceintes (ou canalisations) sur le trajet des gaz,

caractérisé en ce que les moyens (7) pour pulvériser l'eau sont constitués par au moins un injecteur formant deux jets concourants, disposé de façon qu'une nappe d'eau dispersée se situe transversalement au trajet des gaz.

15. Dispositif selon la revendication 14, caractérisé en que l'injecteur comporte deux tuyères (28), les deux extrêmités des tuqères portant des buses (29) calibrant les jets, et en ce que les tuyères (28) et les buses (29) ont une section circulaire.

16. Dispositif selon la revendication 14 ou la revendication 15, caractérisé en que les tuyères (28) et les buses (29) d'un même injecteur sont de formes et de dimensions identiques, leurs axes sont concourants, et les distances séparant l'orifice de la buse du point de concours de axes sont égales.

17. Dispositif selon l'une quelconque des revendications 14 à 16, caractérisé en ce que les tuyères (28) sont montées sur une platine (30), elle-même fixée sur une paroi (34) de l'enceinte (5, 18) (ou de la canalisation), seules les tuyères (28) et les buses (29) d'injection faisant saillie le long de la paroi à l'intérieur de l'enceinte.

18. Dispositif selon l'une quelconque des revendications 14 à 17, caractérisé en ce que les tuyères (28) et les buses (29) d'injection sont situées, en retrait de la surface de la paroi, de façon à ne pas constituer un obstacle sur le trajet des gaz.

19. Dispositif selon la revendication 17, caractérisé en ce qu'un déflecteur (35) situé en amont des tuyères d'injection fait obstacle à la projection accidentelle d'eau à contre-courant des gaz.

20. Dispositif selon l'une quelconque des revendications 15 à 19, caractérisé en ce que les buses (29) de l'injecteur ont un diamètre d'orifice supérieur à 8 mm.

21. Dispositif selon l'une quelconque des revendications 14 à 20, caractérisé en ce que pour constituer une nappe d'eau dispersée on met en oeuvre un injecteur pour chaque tranche de surface de 2,5 m² environ.

22. Dispositif selon l'une quelconque des revendications 14 à 21, caractérisé en ce que plusieurs injecteurs (7) sont disposés au même niveau de l'enceinte (5, 18) (ou de la canalisation) pour former plusieurs nappes d'eau se recouvrant partiellement.

23. Dispositif selon l'une quelconque des revendications 14 à 22, caractérisé en ce que pour le traitement des gaz en aval de l'organe de réception (3) des fibres, les injecteurs (7) sont disposés aussi près de cet organe qu'il est possible sans risquer de mouiller les fibres formant le matelas (6).

24. Dispositif selon l'une quelconque des revendications 14 à 23, caractérisé en ce que sur le trajet des gaz en aval de la zone de dispersion d'eau, est disposée une zone de section réduite (8, 21) pour accélérer les gaz.

25. Dispositif selon l'une quelconque des revendications 14 à 24, caractérisé en ce qu'il comporte un collecteur (15, 20) disposé dans la partie basse de la zone dans laquelle la dispersion est effectuée, pour recueillir et évacuer l'eau déposée.

26. Dispositif selon l'une quelconque des revendications 14 à 25, caractérisé en ce qu'en aval de l'enceinte (5, 18) (ou de la canalisation) dans laquelle l'eau est dispersée, il comporte un système séparateur (12, 23) pour les gouttelettes les plus fines entraînées par les gaz.

27. Dispositif selon la revendication 26, caractérisé en ce que le séparateur (12, 23) est constitué par un cyclône.

## Patentansprüche

1. Verfahren zur Herstellung von Mineralfasermatten, bei dem:

— Fasern hergestellt, dann mittels Gasströmen bis zu einem Ablageorgan (3) befördert werden, wo sie gesammelt und von dem Transportgas getrennt werden,

— eine flüssige Zusammensetzung eines fein verteilten Bindemittels in den die Fasern tragenden Gasstrom stromauf des Ablageorgans (3) eingesprüht wird,

— die Fasermatte (6) gegebenenfalls behandelt, insbesondere wärmebehandelt wird, um das Bindemittel zu fixieren, und Veränderungen erfährt, die zur endgültigen Form führen,

— Wasser in den Weg der Gase, die die Fasern beförderten, stromab des Ablageorgans und/oder in den Weg des von den Behandlungsvorgängen für die Fixierung des Bindemittels ausströmenden Gases und/oder des aus Veränderungen der Fasermatten (6) austretenden Gases zerstäubt wird, dadurch gekennzeichnet, daß das Wasser durch das Aufeinanderprallen von aufeinander zu gerichteten Strahlen zerstäubt wird, derart, daß sich eine Sprühwasserschicht quer zum Weg der Gase entwickelt.

2. Verfahren nach Anspruch 1, dadurch gekennzeichnet, daß das Aufeinanderprallen eines Paares oder mehrerer gleicher Paare von Strahlen herbeigeführt wird, um eine (oder mehrere) im wesentlichen ebene Sprühwasserschicht(en) zu erzeugen.

3. Vorrichtung nach einem der vorhergehenden Ansprüche, bei dem die Eigenschaften des Paares (oder der Paare) der Strahlen so gewählt sind, daß die Sprühwasserschicht (oder die Sprühwasserschichten) den gesamten Querschnitt der Gasströmung überdecken.

4. Verfahren nach einem der vorhergehenden Ansprüche, dadurch gekennzeichnet, daß die Wasserzerstäubung bei Gasen angewendet wird, welche mit einer mittleren Geschwindigkeit strömen, die unterhalb von 10 m/s liegt.

5. Verfahren nach einem der vorhergehenden Ansprüche, dadurch gekennzeichnet, daß die Menge des zerstäubten Wassers bei einem Gasvolumen von $10^3$ m$^3$ zwischen 0,5 und 2 m$^3$ liegt.

6. Verfahren nach einem der vorhergehenden Ansprüche, dadurch gekennzeichnet, daß die Wassermenge pro Zeiteinheit für ein Paar von zusammenwirkenden Strahlen zwischen 10 und 80 m$^3$/h beträgt.

7. Verfahren nach einem der vorhergehenden Ansprüche, dadurch gekennzeichnet, daß der Winkel der zusammenwirkenden Strahlen größer ist als 30°.

8. Verfahren nach Anspruch 7, dadurch gekennzeichnet, daß der Winkel der Strahlen zwischen 60 und 130° liegt.

9. Verfahren nach einem der vorhergehenden Ansprüche, dadurch gekennzeichnet, daß das Sprühwasser mit einem Druck von 3 bis $6 \times 10^5$ Pa zugeführt wird.

10. Verfahren nach einem der vorhergehenden Ansprüche, dadurch gekennzeichnet, daß die pro Querschnittseinheit und pro Stunde zerstäubte Sprühwassermenge in dem Behandlungsraum (5, 18) (oder im Kanalsystem) zwischen 2 und 20 m$^3$/h m$^2$ liegt.

11. Verfahren nach einem der vorhergehenden Ansprüche, dadurch gekennzeichnet, daß die Zerstäubung des Wassers am Eintritt der ausströmenden Gase in den Abgastrakt erzeugt wird.

12. Verfahren nach einem der vorhergehenden Ansprüche, dadurch gekennzeichnet, daß das zerstäubte Wasser anschließend von den Gasen getrennt wird und einem oder mehreren Vorgängen unterworfen wird, die die Eliminierung wenigstens eines Teiles der Stoffe erlauben, mit denen es beim Kontakt mit dem Gas und der Wandung des Behandlungsraumes (oder des Kanalsystems) beladen wird, und daß es für einen neuerlichen Waschvorgang wiederverwendet wird.

13. Verfahren nach Anspruch 12, dadurch gekennzeichnet, daß das von den Gasen abgeschiedene Wasser gefiltert wird, um einen Teil wenigstens der mitgeführten Feststoffe zu eliminieren, wobei das wiederverwendete Wasser nicht mehr als 4% Trockenstoff enthält.

14. Vorrichtung zur Herstellung von Mineralfasermatten mit:

— einem Organ (1) zur Bildung der Fasern,
— einer Einrichtung zur Erzeugung eines oder mehrerer die Fasern befördernder Gasströme,
— einer Einrichtung (4) zum Einsprühen einer flüssigen Zusammensetzung eines fein verteilten Bindemittels in den die Fasern tragenden Gasstrom,
— einem Ablageorgan (3), auf dem die Fasern zur Bildung der Matte (6) gesammelt und von dem Gasstrom getrennt werden,

— gegebenenfalls einer Einrichtung zur Behandlung, insbesondere Wärmebehandlung, der Fasermatte und zur Veränderung der Matte zur Erzeugung ihrer endgültigen Form,
— Behandlungsräumen (oder Kanalsystemen) (5, 9, 11, 17, 18, 22), die die Gase, welche die Fasern beförderten, stromab des Ablageorgans und/oder die Gase, welche von der Behandlungen oder aus Veränderungen der Fasermatten stammen, leiten,
— einer Einrichtung (7) zur Zerstäubung von Wasser in den Behandlungsräumen (oder Kanalsystemen) auf dem Weg der Gase,

dadurch gekennzeichnet, daß die Einrichtung zur Zerstäubung von Wasser (7) durch wenigstens einen Injektor gebildet wird, der zwei zusammenwirkenden Strahlen erzeugt, die derart angeordnet sind, daß sich eine Sprühwasserschicht quer zum Weg des Gases ausbildet.

15. Vorrichtung nach Anspruch 14, dadurch gekennzeichnet, daß der Injektor zwei Rohre (28) aufweist, wobei die beiden Enden der Rohre Düsen (29) tragen, welche die Strahlen kalibrieren, und daß die Rohre (28) und die Düsen (29) einen kreisförmigen Querschnitt aufweisen.

16. Vorrichtung nach Anspruch 14 oder nach Anspruch 15, dadurch gekennzeichnet, daß die Rohre (28) und die Düsen (29) desselben Injektors von gleicher Form und Größe sind, ihre Achsen zusammenlaufen und die Abstände zwischen der Öffnung der Düse bis zu dem Punkt, an dem die Achsen zusammentreffen, gleich sind.

17. Vorrichtung nach einem der Ansprüche 14 bis 16, dadurch gekennzeichnet, daß die Rohre (28) auf einer Platte (30) montiert sind, die ihrerseits an einer Wand (34) eines Behandlungsraumes (5, 18) (oder des Kanalsystems) befestigt ist, wobei nur die Rohre (28) und die Injektordüsen (29) aus der Wand in das Innere des Behandlungsraumes hineinragen.

18. Vorrichtung nach einem der Ansprüche 14 bis 17, dadurch gekennzeichnet, daß die Rohre (28) und die Injektordüsen (29) so in der Wandfläche versenkt angeordnet sind, daß sie kein Hindernis für die Gasströmung bilden.

19. Vorrichtung nach Anspruch 17, dadurch gekennzeichnet, daß ein stromauf der Injektionsrohre angeordnetes Ablenkelement (35) ein Hindernis für eine unbeabsichtigte Wassereinspritzung in Gegenstromrichtung zum Gas bildet.

20. Vorrichtung nach einem der Ansprüche 15 bis 19, dadurch gekennzeichnet, daß die Injektordüsen (29) einen Öffnungsdurchmesser von mehr als 8 mm aufweisen.

21. Vorrichtung nach einem der Ansprüche 14 bis 20, dadurch gekennzeichnet, daß zur Bildung eines Sprühwasserschicht je ein Injektor für einen Oberflächenbereich von ca. 2,5 m$^2$ vorgesehen ist.

22. Vorrichtung nach einem der Ansprüche 14 bis 21, dadurch gekennzeichnet, daß mehrere Injektoren (7) auf derselben Höhe des Behandlungsraumes (5, 18) (oder es Kanalsystems) an-

geordnet sind, um einander teilweise überdeckende Wasserschichten zu bilden.

23. Vorrichtung nach einem der Ansprüche 14 bis 22, dadurch gekennzeichnet, daß die Injektoren (7) für die Behandlung des Gases stromab des Ablageorgans (3) der Fasern so nahe an diesem Organ angeordnet sind, wie dies ohne Gefahr der Befeuchtung der die Matten (6) bildenden Fasern möglich ist.

24. Vorrichtung nach einem der Ansprüche 14 bis 23, dadurch gekennzeichnet, daß auf dem Gasweg stromab der Wasserzerstäubungszone eine Zone mit vermindertem Querschnitt (8, 21) zur Beschleunigung der Gase angeordnet ist.

25. Vorrichtung nach einem der Ansprüche 14 bis 24, gekennzeichnet durch einen Sammelbehälter (15, 20), der in dem unteren Bereich der Wasserzerstäubungszone angeordnet ist, um das ablaufende Wasser zu sammeln und abzuleiten.

26. Vorrichtung nach einem der Ansprüche 14 bis 25, dadurch gekennzeichnet, daß sie stromab des Behandlungsraumes (5, 18) (oder des Kanalsystems), in dem das Wasser zerstäubt wird, einen Abscheider (12, 23) für die von dem Gas mitgeführten feinsten Tröpfchen aufweist.

27. Vorrichtung nach Anspruch 26, dadurch gekennzeichnet, daß der Abscheider (12, 23) als Fliehkraftabscheider ausgebildet ist.


**Claims**

1. Process for the manufacture of webs of mineral fibres, in which

— fibres are produced and then carried by gas currents to a receiving device (3) where they are collected and separated from the carrier gas,
— a finely dispersed liquid binder composition is projected into the gas current carrying the fibres, upstream of the receiving device (3),
— the web of fibres (6) is optionally treated, in particular heat treated, to fix the binder, and subjected to transformations leading to its final form,
— water is sprayed into the path of the gas which has carried the fibres, downstream of the receiving device, and/or that of the gas emanating from the treatment operations for fixing the binder and/or the transformation of the mat of fibres (6), characterised in that the water is dispersed by the collision of jets directed towards one another so that a sheet of dispersed water forms transversely to the path of the gas.

2. Process according to claim 1, characterised in that the collision takes place between the jets of one or more pairs of identical jets to form one or more than one substantially planar sheet of droplets.

3. Process according to one of the preceding claims, in which the characteristics of the pair (or pairs) of jets are chosen so that the sheet (or sheets) of droplets of dispersed water covers the entire cross-section of passage of the gas.

4. Process according to any one of the preceding claims, characterised in that the water is dispersed on gas flowing at an average velocity below 10 m/s.

5. Process according to any one of the preceding claims, characterised in that the quantity of dispersed water is from 0.5 to 2 m$^2$ of water for a volume of gas of $10^3 \cdot$ m$^3$.

6. Process according to any one of the preceding claims, characterised in that the rate of supply of water for a pair of converging jets is from 10 to 80 m$^3$/h.

7. Process according to any one of the preceding claims, characterised in that the angle of the converging jets is greater than 30°.

8. Process according to claim 7, characterised in that the angle of the jets is from 60 to 130°.

9. Process according to any one of the preceding claims, characterised in that the dispersed water is raised to a pressure of from 3 to 6 $\cdot$ 10$^5$ Pa.

10. Process according to any one of the preceding claims, characterised in that the rate of supply of dispersed water in the container (5, 18) (or duct) per unit surface area of cross-section and per hour is from 2 to 20 m$^3$/h $\cdot$ m$^2$.

11. Process according to any one of the preceding claims, characterised in that the dispersion of water takes place from the entrance of the effluent gas into the evacuation circuit.

12. Process according to any one of the preceding claims, characterised in that the dispersed water is subsequently separated from the gas and subjected to one or more operations providing for the removal of at least part of the products with which it is charged in contact with the gas and with the walls of the container (or of the duct) and that it is reused for a fresh washing operation.

13. Process according to claim 12, characterised in that the water separated from the gas is filtered to remove at least part of the solid products entrained by it, the water which is reused not containing more than 4% of dry matter.

14. Apparatus for the manufacture of a web of mineral fibres, comprising

— a device (1) for the formation of fibres,
— means for producing one or more gas currents carrying the fibres,
— means (4) for the projection of a finely dispersed liquid binder composition into the gas current carrying the fibres,
— a receiving device (3) on which the fibres are collected to form the webs (6) and are separated from the gas current,
— optionally means for the treatment, in particular heat treatment, of the web of fibres and transformation of the web to impart to it its finished form,
— containers (or ducts) (5, 9, 11, 17, 18, 22) conducting the gas which has carried the fibres

downstream of the receiving device and/or the gas issuing from the treatment or transformation of the web of fibres,

— means (7) for spraying water in these containers (or ducts) into the path of the gas,

characterised in that the means (7) for spraying the water consist of at least one injector forming two converging jets arranged so that a sheet of dispersed water is situated transversely to the path of the gas.

15. Apparatus according to claim 14, characterised in that the injector comprises two tubes (28), the two ends of the tubes carrying nozzles (29) calibrating the jets, and in that the tubes (28) and nozzles (29) are circular in cross-section.

16. Apparatus according to claim 14 or claim 15, characterised in that the tubes (28) and the nozzles (29) of one and the same injector have identical forms and dimensions, their axes are converging, and the distances separating the orifice of the nozzle from the point of convergence of the axes are equal.

17. Apparatus according to any one of claims 14 to 16, characterised in that the tubes (28) are mounted on a plate (30) which is fixed to a wall (34) of the container (5, 18) (or of the duct), only the injector tubes (28) and nozzles (29) projecting along the wall on the inside of the container.

18. Apparatus according to any one of claims 14 to 17, characterised in that the injector tubes (28) and nozzles (29) are retracted from the surface of the wall so as not to constitute an obstacle in the path of the gas.

19. Apparatus according to claim 17, characterised in that a deflector (25) situated upstream of the injector tubes forms an obstacle to accidental projection of water in countercurrent to the gas.

20. Apparatus according to any one of claims 15 to 19, characterised in that the nozzles (29) of the injector have an orifice diameter greater than 8 mm.

21. Apparatus according to any one of claims 14 to 20, characterised in that, to form a sheet of dispersed water, an injector is used for each portion of surface of about 2.5 m².

22. Apparatus according to any one of claims 14 to 21, characterised in that several injectors (7) are arranged at the same level of the container (5, 18) (or duct) to form several sheets of water which partly overlap.

23. Apparatus according to any one of claims 14 to 22, characterised in that or the treatment of gas downstream of the receiving device (3) for the fibres, the injectors (7) are arranged as close to this device as is possible without risking wetting the fibres which form the web (6).

24. Apparatus according to any one of claims 14 to 23, characterised in that a zone of reduced cross-section (8, 21) is arranged downstream of the zone of dispersion of water in the path of the gas in order to accelerate the gas.

25. Apparatus according to any one of claims 14 to 24, characterised in that it comprises a collector (15, 20) arranged in the lower part of the zone in which dispersion takes place, to collect and evacuate the deposited water.

26. Apparatus according to any one of claims 14 to 25, characterised in that, downstream of the container (5, 18) (or of the duct) in which the water is dispersed, it comprises a separating system (12, 23) for the finest droplets entrained by the gas.

27. Apparatus according to claim 26, characterised in that the separator (12, 23) consists of a cyclone.

Fig.1

Fig.2

Fig. 3

Fig. 4

Fig. 5

**Fig. 6**